# FASCICULE DE BREVET EUROPEEN

(11) **EP 3 671 970 B1**
(45) Date de publication et mention de la délivrance du brevet: **02.02.2022**
(21) Numéro de dépôt: 19217408.4
(22) Date de dépôt: 18.12.2019
(51) Int. Cl.: H01R 13/506, H01R 24/78, H01R 13/66, H01R 13/70, H02G 3/12, H01R 13/625, H01R 31/06

(54) **POINT DE CONNEXION ÉLECTRIQUE**
ELEKTRISCHER ANSCHLUSSPUNKT
ELECTRICAL CONNECTION POINT

(30) Priorité: 19.12.2018 FR 1873392
(43) Date de publication de la demande: 24.06.2020
(73) Titulaire: Schneider Electric Industries SAS, 92500 Rueil Malmaison (FR)
(72) Inventeur: PETTINOTTO, Gilles, 38050 GRENOBLE Cedex 09 (FR); DALBE, Michel, 38050 GRENOBLE Cedex 09 (FR); LE-TARNEC, Yann, 38050 GRENOBLE Cedex 09 (FR); VIROT, Clément, 38050 GRENOBLE Cedex 09 (FR)
(74) Mandataire: Lavoix

(56) Documents cités:
- WO-A1-2016/071599
- CN-U- 207 743 434
- DE-A1- 4 003 701
- FR-A1- 3 000 310
- KR-A- 20170 060 646

## Description

La présente invention concerne un point de connexion électrique.

WO2016071599A1 décrit un point de connexion électrique mural, comprenant un bloc mural. Le bloc mural est prévu pour être monté à demeure dans un mur en étant connecté au réseau électrique. Le point de connexion mural comprend plusieurs blocs fonctionnels, le bloc mural étant conçu pour recevoir tour à tour l'un d'entre eux. Le bloc fonctionnel reçu par le bloc mural est alors fixé de façon amovible sur le bloc mural, de façon à pouvoir être remplacé par un autre bloc fonctionnel en fonction de l'utilisation. Chaque bloc fonctionnel assure une fonction électrique particulière qui est mise en service lorsque le bloc fonctionnel est fixé au bloc mural. Pour assurer la connexion électrique entre le bloc mural et le bloc fonctionnel, le bloc mural est pourvu de pinces de connexion, alors que chaque bloc fonctionnel est pourvu de broches complémentaires de ces pinces.

Ce point de connexion mural connu présente, comme principal inconvénient, que le bloc fonctionnel peut être accidentellement détaché du bloc mural, du fait de l'amovibilité de la fixation du bloc fonctionnel au bloc mural. Par exemple, lorsque le bloc fonctionnel assure une fonction de prise d'alimentation électrique d'un appareil électrique et reçoit une fiche appartenant audit appareil électrique, une traction sur la fiche de l'appareil électrique risque d'entraîner accidentellement une désolidarisation du bloc fonctionnel et du bloc mural. La déconnexion soudaine de l'alimentation électrique qui résulte de cette désolidarisation accidentelle peut générer un arc électrique et/ou détériorer l'appareil électrique qui était alimenté par le point de connexion.

FR 3 000 310 A1 divulgue un point de connexion électrique selon le préambule de la revendication 1.

Un des objectifs de l'invention est de résoudre les inconvénients de l'art antérieur mentionné ci-dessus, en proposant un nouveau point de connexion électrique réduisant le risque de détachement accidentel du bloc fonctionnel, tout en améliorant le caractère amovible de la fixation du bloc fonctionnel.

L'invention a pour objet un point de connexion électrique, comprenant :
- au moins un bloc fonctionnel, qui comprend une façade fonctionnelle et une fiche électrique arrière fixement solidaire de la façade fonctionnelle; et
- un socle, pour fixer à demeure le point de connexion électrique à un support, le socle comprenant un logement et un connecteur électrique interne débouchant dans le logement, le bloc fonctionnel pouvant être reçu dans le logement, jusqu'à une position enfichée dans laquelle la fiche électrique arrière est enfichée dans le connecteur électrique interne.

Selon l'invention, le point de connexion électrique comprend en outre un verrou, qui évolue entre une configuration de déverrouillage, dans laquelle le verrou autorise un retrait du bloc fonctionnel hors du logement, lorsque le bloc fonctionnel est reçu dans le logement, et une configuration de verrouillage, dans laquelle le verrou maintient le bloc fonctionnel dans la position enfichée. En outre, le verrou comprend une bague, qui appartient au bloc fonctionnel, qui entoure la façade fonctionnelle et qui est disposée de façon à être accessible depuis l'extérieur du logement lorsque le bloc fonctionnel est reçu dans le logement, la bague étant rotative par rapport à la fiche électrique arrière, entre une position déverrouillage, pour mettre le verrou en configuration de déverrouillage, et une position de verrouillage, pour mettre le verrou en configuration de verrouillage lorsque le bloc fonctionnel est en positon enfichée.

Grâce à l'invention, il est aisé de retirer et détacher le bloc fonctionnel du socle, dans la mesure où il suffit pour cela, de préférence sans outil, de tourner la bague jusqu'en position de déverrouillage, ce qui fait basculer le verrou en configuration de déverrouillage, de sorte que le bloc fonctionnel peut être librement retiré du logement. Néanmoins, lorsque le verrou est en configuration de verrouillage, une simple traction sur le bloc fonctionnel n'entraîne pas son retrait du logement, puisque le verrou maintient le bloc fonctionnel en position enfichée. Néanmoins, lorsque cela est souhaité, il est aisé de retirer le bloc fonctionnel du socle, par exemple pour le remplacer par un autre bloc fonctionnel, puisque le déverrouillage du verrou peut être effectué par simple rotation de la bague, accessible depuis l'extérieur, de préférence sans outil. En particulier, il n'est pas nécessaire d'effectuer un démontage du point de connexion pour effectuer ce déverrouillage, et la bague est, par sa forme de bague et sa disposition autour de la façade fonctionnelle, relativement discrète, voire esthétique.

D'autres caractéristiques optionnelles de l'invention sont définies dans ce qui suit :
- La bague est rotative par rapport à la fiche électrique arrière, autour d'un axe de rotation sur lequel la façade fonctionnelle est centrée et avec lequel la bague est coaxiale ; le verrou comprend au moins une encoche de verrouillage, qui appartient au socle et qui débouche dans le logement, en étant orientée, lorsque le bloc fonctionnel est reçu dans le logement, radialement vers l'intérieur par rapport à l'axe de rotation ; la bague comprend, pour chaque encoche de verrouillage, un ergot respectif, qui fait saillie radialement vers l'extérieur par rapport à l'axe de rotation ; et lorsque le bloc fonctionnel est en position enfichée et que le verrou est en configuration de verrouillage, chaque ergot coopère mécaniquement avec son encoche de verrouillage correspondante pour maintenir le bloc fonctionnel dans la position enfichée.
- Au moins l'une des encoches de verrouillage et son ergot correspondant comprennent une surface en pente hélicoïde et sont configurés pour que : lors de l'introduction du bloc fonctionnel dans le logement vers la position enfichée, l'encoche de verrouillage et l'ergot entrent en contact par l'intermédiaire de la surface en pente hélicoïde, pour mécaniquement entraîner une rotation de la bague jusqu'à la position de déverrouillage ; et lorsque le bloc fonctionnel est en position enfichée, l'encoche de verrouillage et l'ergot ne sont plus en contact par l'intermédiaire de la surface en pente hélicoïde, ce qui autorise une mise en position de verrouillage de la bague.
- Le verrou comprend en outre au moins un ressort de verrou, qui exerce une force de rappel élastique de la bague vers la position de verrouillage, lorsque la bague est en position de déverrouillage, chaque ressort de verrou étant disposé entre la bague et la façade fonctionnelle.
- Le bloc fonctionnel comprend un système électronique, qui comprend une carte électronique, disposée à l'intérieur du bloc fonctionnel, la bague étant rotative jusqu'à une position de commande dans laquelle la bague commande un changement d'état du système électronique, la position de commande étant distincte de la position de verrouillage.
- Le système électronique comprend un contact primaire, porté par la bague, et un contact secondaire, porté par la façade fonctionnelle, le contact primaire et le contact secondaire étant positionnés de façon à être mis en contact électrique l'un avec l'autre lorsque la bague atteint la position de commande, pour ainsi commander le changement d'état du système électronique.
- La carte électronique comprend un bouton de commande positionné en surface de la carte électronique, la bague comprenant une jambe de commande qui, en position de commande de la bague, appuie sur le bouton de commande pour commander le changement d'état du système électronique.
- Le système électronique comprend une antenne, qui est électriquement connectée à la carte électronique, qui s'étend au moins en partie entre la bague et la façade fonctionnelle.
- Le système électronique comprend une terminaison lumineuse, qui est disposée entre la bague et la façade fonctionnelle, de façon à être visible au travers de la bague lorsque la terminaison lumineuse est éclairée.
- La façade fonctionnelle forme une prise électrique externe débouchant hors du logement lorsque le bloc fonctionnel est reçu dans le logement, la prise électrique externe étant conçue de sorte qu'une fiche électrique externe d'un appareil électrique soit enfichée dans la prise électrique externe, afin d'alimenter ledit appareil électrique via cette fiche électrique externe, avec de l'énergie électrique reçue par la fiche électrique arrière.
- Le bloc fonctionnel comprend en outre un tiroir, qui est mobile entre : une position primaire, dans laquelle le tiroir bloque le verrou en configuration de verrouillage, le tiroir étant mis en position primaire par la fiche électrique externe lorsque la fiche électrique externe est enfichée dans la prise électrique externe ; et une position secondaire, dans laquelle le tiroir autorise le verrou à évoluer entre la configuration de verrouillage et la configuration de déverrouillage, le bloc fonctionnel comprenant au moins un ressort de sécurité qui exerce une force de rappel élastique du tiroir vers la position secondaire, lorsque le tiroir est en position primaire.

D'autres caractéristiques de l'invention ressortent plus en détail de la description qui suit, présentant des modes de réalisation préférentiels de l'invention sans but limitatif, cette description faisant référence aux dessins annexés listés ci-dessous :
[Fig 1] la figure 1 est une vue en perspective d'un point de connexion électrique selon un premier mode de réalisation conforme à l'invention ;
[Fig 2] la figure 2 est une vue en perspective éclatée du point de connexion électrique de la figure 1 ;
[Fig 3] [Fig 4] les figures 3 et 4 sont deux vues en perspective, sous un angle différent, d'un bloc fonctionnel appartenant au point de connexion des figures précédentes ;
[Fig 5] [Fig 6] les figures 5 et 6 sont deux vues en perspective, sous un angle différent, du bloc fonctionnel des figures précédentes, où une bague appartenant au bloc fonctionnel est omise ;
[Fig 7] la figure 7 est une vue de dos de la bague, de ressorts de verrou et de terminaisons lumineuses appartenant au bloc fonctionnel des figures précédentes ;
[Fig 8] la figure 8 est une vue en perspective du bloc fonctionnel des figures précédentes, où la bague, les ressorts de verrou et un enjoliveur du bloc fonctionnel sont omis ;
[Fig 9] la figure 9 est une coupe longitudinale de la figure 1, où un support est également représenté ;
[Fig 10] la figure 10 est une vue en perspective d'un bloc fonctionnel appartenant à point de connexion électrique selon un deuxième mode de réalisation conforme à l'invention, où une partie arrière du boîtier arrière est omise ;
[Fig 11] la figure 11 est une vue similaire à la figure 11, où une bague est en outre omise.

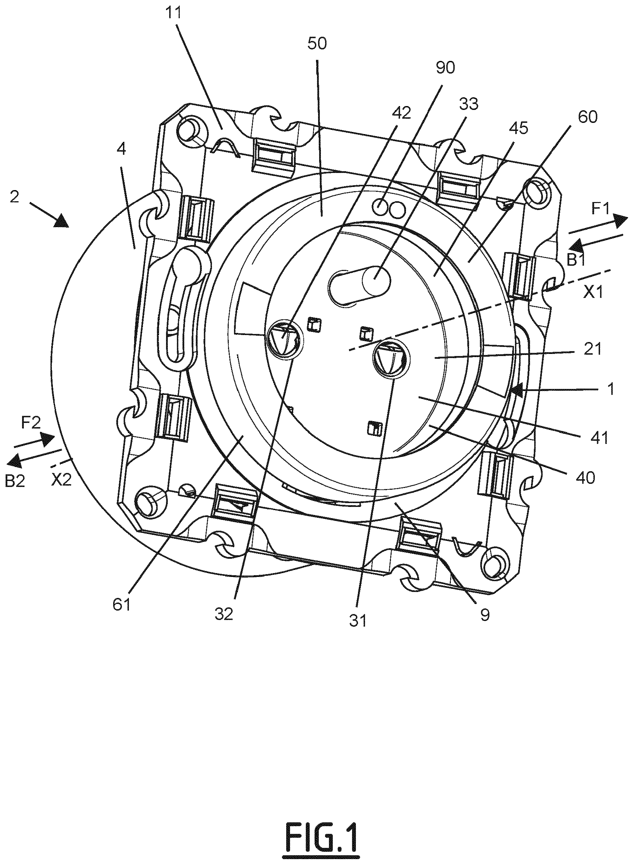

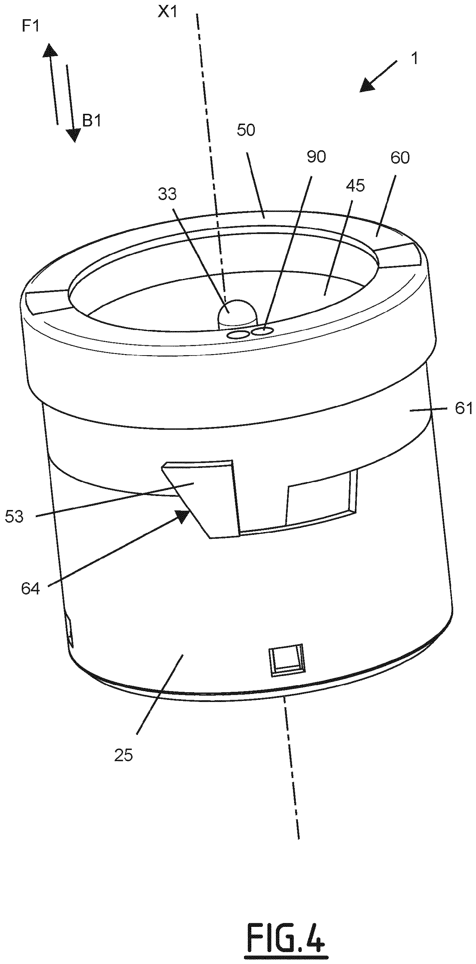

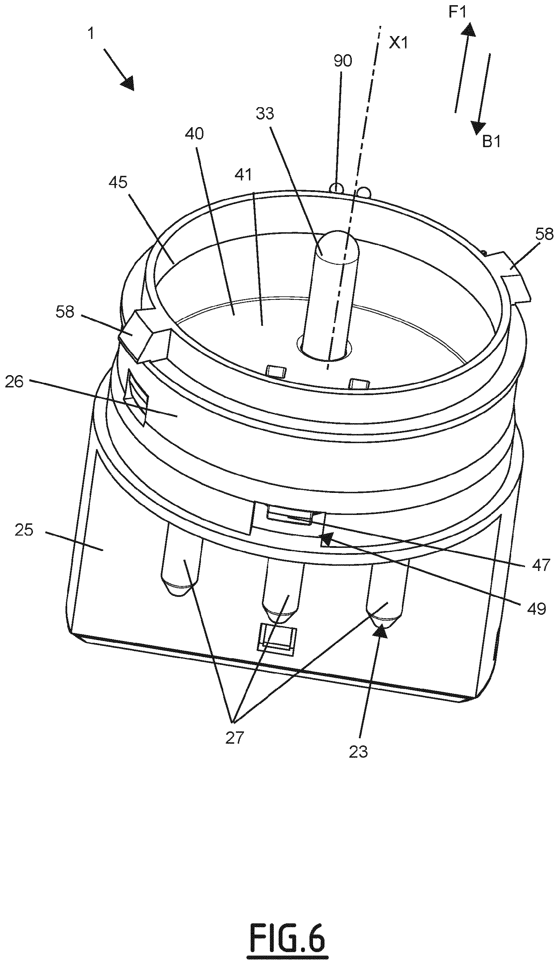

Les figures 1 à 9 montrent un point de connexion électrique selon un premier mode de réalisation conforme à l'invention, comprenant un bloc fonctionnel 1 et un socle 2. On peut prévoir que le point de connexion électrique comprend un ou plusieurs autres blocs fonctionnels que l'on peut alternativement associer avec ce même socle 2, et qui, de préférence, assurent une fonction électrique spécifique, différente de celle du bloc 1.

Le point de connexion électrique est conçu pour être installé dans un bâtiment ou en extérieur, en étant encastré ou fixé à demeure à un support, tel qu'un mur ou un sol. Le point de connexion électrique est particulièrement adapté pour être installé dans un logement d'habitation. Le point de connexion électrique est conçu pour être raccordé électriquement à un réseau électrique équipant le support, en particulier équipant le bâtiment, par exemple un réseau électrique monophasé délivrant une tension de 240V. Plus généralement, on pourrait prévoir que le réseau électrique, est monophasé, multiphasé, par exemple triphasé, dans une plage comprise entre 80V et 600V.

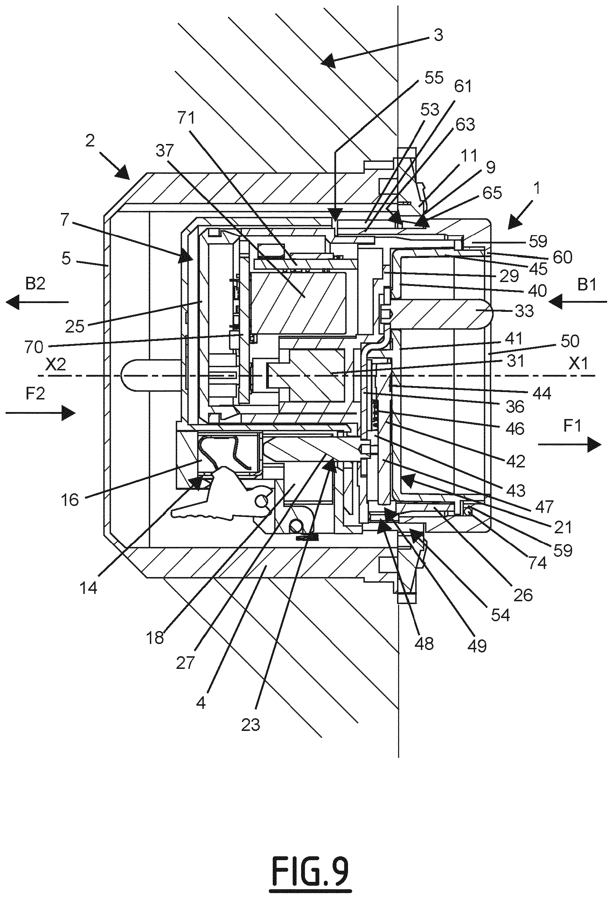

Le socle 2 du point de connexion électrique est prévu pour être fixé à demeure, c'est-à-dire de façon permanente ou définitive, au support du point de connexion, ce support étant par exemple un mur 3 du bâtiment, comme montré sur la figure 9. Le socle peut ainsi être qualifié de support d'encastrement. Au contraire, le bloc fonctionnel 1 est fixé de façon amovible au socle 2, c'est-à-dire est spécialement prévu pour pouvoir être fixé et facilement désolidarisé du socle 2.

Le socle 2 présente une forme générale de récipient, comme visible notamment sur les figures 1, 2 et 9. Le socle 2 comprend une niche, qui comprend une paroi périphérique 4, ici cylindrique à base circulaire, coaxiale avec un axe X2 du socle 2, l'axe X2 étant fixe par rapport au socle 2. La niche du socle 2 comprend aussi un fond 5, orthogonal ou transversal par rapport à l'axe X2, fermant la paroi périphérique 4, et donc la niche, à son extrémité axiale arrière. A son extrémité axiale avant, opposée au fond 5, la paroi 4 est ouverte. Ainsi, le socle 2 comprend un logement 7, qui est préférentiellement borgne en direction du fond 5. Ici, le logement 7 est délimité par la niche du socle 2, en particulier par le fond 5 dans une direction axiale arrière B2 du socle 2, parallèle à l'axe X2, par la paroi 4 dans les directions radiales à l'axe X2. Le logement 7 est ouvert dans une direction axiale avant F2 du socle 2, opposée à la direction B2. L'extrémité de la paroi 4 qui est axialement dans la direction F2 forme un bord périphérique d'ouverture 9, délimitant le débouchant du logement 7. L'axe X2 peut être vu comme coaxial avec la forme cylindrique du logement 7.

Dans le présent document, concernant le socle 2, les termes tels que « axial », « radial » et « hauteur » se rapportent à l'axe X2 sauf mention explicite du contraire.

De préférence, le socle 2 comprend une plaque de fixation 11, qui s'étend radialement vers l'extérieur à partir du bord d'ouverture 9 et qui s'étend essentiellement dans un plan orthogonal X2. De façon optionnelle, la plaque de fixation 11 peut recevoir une pièce de masquage annulaire, non représentée, pour protéger et cacher la plaque de fixation 11 aux yeux de l'utilisateur.

Pour être fixé à demeure au support 3, le socle 2 est avantageusement encastré dans le support 3, la niche étant entièrement reçue dans une ouverture borgne ménagée dans ledit support, la plaque de fixation 11 s'étendant préférentiellement hors de l'ouverture borgne et recouvrant au moins partiellement le bord de cette ouverture borgne. Le socle 2 présente avantageusement des orifices traversants, par exemple au travers de la plaque de fixation 11 et/ou du fond 5, pour fixer le socle 2 à demeure au support à l'aide de vis ou moyens de fixation similaires. En outre, le socle 2 peut avantageusement comprendre des moyens de rétention du genre griffes ou pointes pour obtenir une fixation à demeure du support 3 par implantation. Lorsque le support 3 est un mur comme sur la figure 9, l'axe X2 se retrouve à l'horizontale. Lorsque le support 3 est un sol ou un plafond, l'axe X2 se retrouve à la verticale.

Le socle 2 comprend en outre un connecteur électrique interne 14, visible en coupe sur la figure 9.

Ici, le connecteur 14 est entièrement contenu dans le logement 7, à proximité du fond 5, et est fixement solidaire de la niche. En variante, on peut prévoir que le connecteur 14 est partiellement contenu dans le logement 7, simplement de façon à déboucher dans le logement 7.

Le connecteur 14 comprend au moins un pôle, chaque pôle comprenant de préférence une borne électrique 16, débouchant par exemple dans la direction B2, et un connecteur électrique femelle 18, tel qu'une pince de connexion ou une alvéole, débouchant par exemple dans la direction F2. Le connecteur femelle 18 de chaque pôle du connecteur 14 débouche dans le logement 7. Pour chaque pôle du connecteur 14, la borne 16 et le connecteur femelle 18 sont électriquement connectés. De préférence, le connecteur 14 comprend au moins autant de pôles que le nombre de pôles du réseau électrique auquel le socle 2 est destiné à être raccordé électriquement. En particulier, le connecteur 14 comprend un pôle de plus que le nombre de pôles du réseau électrique auquel le socle 2 est destiné à être raccordé électriquement, ce pôle supplémentaire étant un pôle de terre, qui n'appartient pas au réseau électrique. Dans le présent exemple, le point de connexion électrique est conçu pour être raccordé à un réseau monophasé et à la terre. Le réseau présente deux pôles formés par deux conducteurs respectifs, à savoir un pôle de phase et un pôle de neutre. La terre constitue un troisième pôle, formant un troisième conducteur. Le connecteur 14 comprend donc également trois pôles, à savoir un pôle de phase, un pôle de neutre et un pôle de terre. Sur la figure 9, seul le pôle de terre est montré, incluant sa borne 16 et son connecteur femelle 18. La borne 16 est conçue pour recevoir l'un des conducteurs du réseau électrique, afin de connecter électriquement le pôle concerné du connecteur 14 à ce conducteur. Lorsque le socle 2 est monté à demeure sur le support 3 et que les pôles du connecteur interne 14 sont connectés électriquement aux pôles respectifs du réseau électrique, chaque pôle du connecteur 14, délivre, à son connecteur 18 correspondant, l'énergie électrique provenant du réseau électrique.

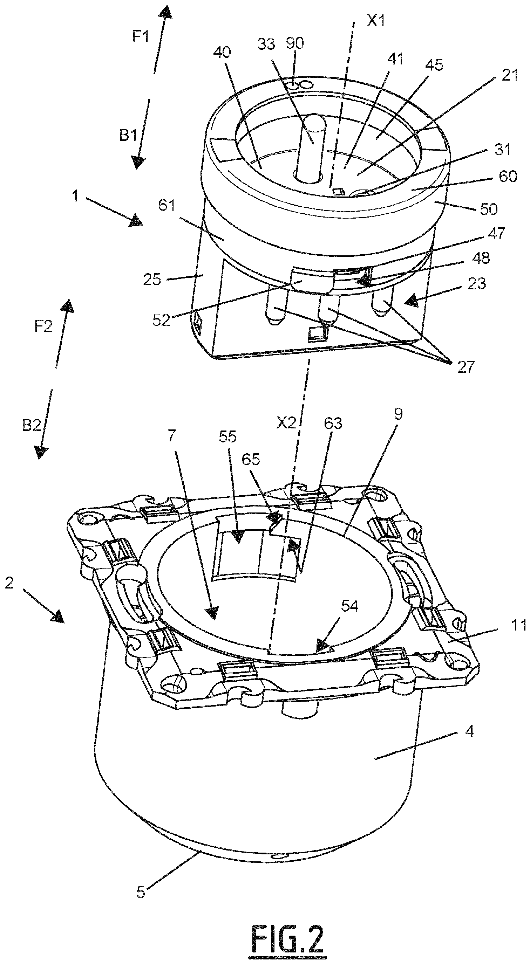

Comme visible notamment sur les figures 2 à 6 et 9, le bloc fonctionnel 1 comprend une façade fonctionnelle 21, une fiche électrique arrière 23 et un boîtier arrière 25, qui sont fixement solidaires les uns des autres.

Si l'on prévoit que le point de connexion comprend plusieurs blocs fonctionnels, de préférence, la fiche arrière 23 est identique, ou pour le moins fonctionnellement équivalente, d'un bloc fonctionnel à l'autre. D'un bloc fonctionnel à l'autre, on prévoit par exemple que la façade fonctionnelle 21 diffère, ainsi que le contenu du boîtier 25, si un tel boîtier 25 est prévu.

Le bloc fonctionnel 1 définit un axe X1 qui traverse la façade 21, et, de préférence, le boîtier 25. On définit une direction axiale avant F1 du bloc fonctionnel 1, parallèle à l'axe X1, et une direction axiale arrière B1 du bloc fonctionnel 1, opposée à la direction F1.

Dans le présent document, concernant le bloc 1, les termes tels que « axial », « radial » et « hauteur » se rapportent à l'axe X1 sauf mention explicite du contraire.

La façade 21 est tournée dans la direction F1, alors que la fiche 23 est tournée dans la direction B1. Par rapport à la fiche 23 et au boîtier 25, la façade 21 est disposée dans la direction F1.

Le bloc fonctionnel 1 est conçu pour être reçu par le socle 2 dans le logement 7, de façon à y être fixé de façon amovible. Pour cela, on introduit la fiche 23 et le boîtier 25, s'il est prévu, dans le logement 7, au travers du bord 9, en déplaçant le bloc 1 dans la direction F1 par rapport au socle 2. Le retrait du bloc fonctionnel 1 hors du logement 7 est effectué par déplacement du bloc 1 selon la direction B1 par rapport au socle 2. Une fois retiré, le bloc 1 est entièrement hors du logement 7.

La fiche électrique arrière 23 est conçue pour être enfichée dans le connecteur électrique interne 14, ce qui est le cas pour les figures 1 et 9. Lorsque la fiche 23 est ainsi enfichée, le bloc 1 est reçu dans le logement 7 en étant positionné par rapport au socle 2 dans une position dite « enfichée ». En particulier, en position enfichée, la fiche 23 est radialement entourée par la paroi 4, ainsi que, s'il est prévu, le boîtier 25.

Lorsque la fiche 23 est enfichée, la fiche 23 est électriquement connectée au connecteur 14. Le bloc 1 est alors alimenté en énergie électrique par le connecteur 14, via la fiche 23. Lorsque la fiche 23 n'est pas enfichée, ce qui est notamment le cas lorsque le bloc 1 est hors du logement 7, le bloc 1 n'est pas alimenté par le connecteur 14.

De préférence, la fiche 23 comprend autant de pôles que le connecteur 14, chaque pôle de la fiche 23 étant électriquement connecté à l'un des pôles du connecteur 14 lorsque la fiche 23 est enfichée. Chaque pôle de la fiche 23 comprend avantageusement un connecteur électrique mâle 27, qui se présente par exemple sous la forme d'une broche électrique, et qui est complémentaire avec l'un des connecteurs électriques femelles 18. Chaque connecteur 27 est avantageusement tourné dans la direction B1, de sorte à se trouver tourné en vis-à-vis du connecteur 18 correspondant lorsque le bloc 1 est reçu dans le logement 7. Comme montré sur la figure 9, en position enfichée, pour chaque pôle, le connecteur 27 est reçu dans le connecteur 18. En position enfichée, les pôles de la fiche 23 et du connecteur 14 sont donc respectivement raccordés électriquement.

En position enfichée, le boîtier 25, s'il est prévu, est entièrement reçu dans le logement 7, et la façade 21 est accessible depuis l'extérieur du logement 7, pour sa face tournée dans la direction F1. Cet accès à la façade est obtenu soit au travers du bord 9, soit dans la mesure où la façade 21 est radialement entourée par le bord 9, soit parce que la façade 21 fait saillie hors du logement 7 dans la direction F1. De préférence, en position enfichée, les axes X1 et X2 sont coaxiaux, et les directions F1 et F2 sont dans la même direction.

De préférence, lorsque la fiche 23 est enfichée dans le connecteur 14, le bloc 1 peut coulisser parallèlement à l'axe X2 par rapport au socle 2, la fiche 23 coulissant alors dans le connecteur 14. L'axe X2 peut alors être qualifié d'axe de coulissement. En position enfichée, le bloc 1 est avantageusement fixé en rotation autour de l'axe X2 par rapport au socle 2.

Le coulissement de la fiche 23 dans le connecteur 14 est obtenu par coulissement des connecteurs 27 dans leur connecteur 18 respectif. Chaque connecteur 27 est pour cela parallèle à l'axe X1, alors que chaque connecteur 18 est parallèle à l'axe X2.

Pour guider le coulissement du bloc 1 dans le socle 2, on prévoit avantageusement que le boîtier 25 du bloc 1 et que le logement 7 ont une forme complémentaire, qui guide le coulissement du bloc 1 par rapport au socle 2 le long de l'axe X2. Cette forme complémentaire est avantageusement anti-rotation autour de l'axe X2, de sorte que, une fois introduit dans le logement 7, le bloc 1 adopte une orientation prédéterminée par rapport au socle 2 autour de l'axe X2.

La position enfichée est atteinte de préférence lorsque le bloc 1, coulissant par rapport au socle 2, arrive en butée axiale par rapport au socle 2, dans la direction B1. De préférence, cette butée est obtenue par mise en butée d'enfichage de la fiche 23 dans le connecteur 14. Par exemple, la position enfichée est atteinte quand au moins l'un des connecteurs 27 arrive en butée contre le fond de son connecteur 18 dans la direction B1.

En variante, on pourrait prévoir que la position enfichée est atteinte lorsque la fiche 23 est enfichée dans le connecteur 14 alors que le boîtier 25 arrive en butée contre le fond 5 dans la direction B1.

Alternativement ou de surcroît, la fixation en rotation autour de l'axe X2 du bloc 1 par rapport au socle 2 est assurée par coopération mécanique anti-rotation de la fiche 23 avec le connecteur 14. Pour cela, par exemple, les connecteurs 18 et 27 sont disposés, comme dans le présent exemple, de façon radialement décalée par rapport aux axes X1 et X2.

Pour le bloc fonctionnel 1 illustré sur les figures 1 à 9, la façade fonctionnelle 21 forme une prise électrique externe, tournée dans la direction F1. Cette prise électrique externe est alimentée en énergie électrique par la fiche électrique arrière 23. La prise électrique externe est conçue de sorte qu'une fiche électrique externe complémentaire, non représentée, appartenant à un appareil électrique, c'est-à-dire un appareil à alimentation électrique par l'intermédiaire de la fiche externe, soit enfichée dans la prise électrique externe de la façade 21. Cela connecte électriquement la prise externe avec la fiche externe. Ainsi, cet appareil électrique est alimenté via sa fiche électrique externe, par la prise électrique externe, avec de l'énergie électrique reçue par la fiche électrique arrière 23. En position enfichée du bloc 1, alors que le socle 2 est connecté au réseau électrique du support 3, la fiche externe reçoit l'énergie électrique fournie par le réseau, via le connecteur 14, la fiche arrière 23 et la prise externe de la façade 21 dans laquelle la fiche externe est enfichée.

Lorsque le bloc 1 est reçu dans le logement 7, la prise électrique externe débouche à l'extérieur du support 3 et du logement 7 dans la direction F1 pour pouvoir recevoir une fiche externe.

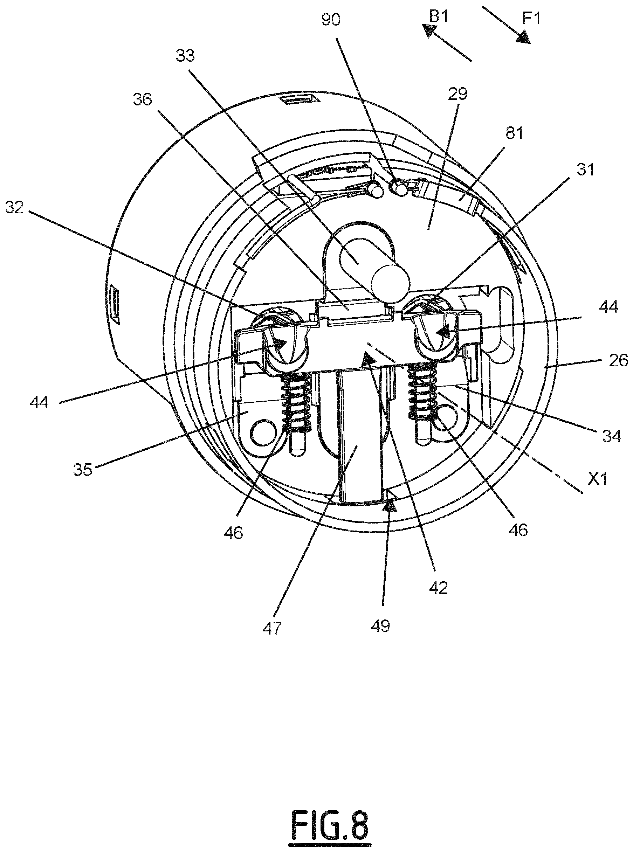

La façade 21, formant une prise électrique externe, comprend autant de pôles que la fiche 23, chaque pôle comprenant de préférence soit une alvéole électrique, par exemple lorsque le pôle est une phase ou un neutre, soit une broche électrique, par exemple lorsque le pôle est la terre. L'un des pôles, notamment la terre, peut aussi comprendre une borne sous la forme d'une lame disposée en périphérie de la façade 21. Ici, la façade 21 comprend deux pôles 31 et 32 à alvéole électrique, respectivement de phase et de neutre, et un pôle 33 à broche électrique, de terre. Chaque pôle 31, 32 et 33 est électriquement relié à l'un des pôles correspondant, ici l'un des connecteurs 27, appartenant à la fiche arrière 23. Par exemple, comme visible sur les figures 8 et 9, le pôle 33 est électriquement relié à l'un des pôles de la fiche 23, ici l'un des connecteurs 27, par l'intermédiaire d'un contact fixe 36, assurant un raccordement électrique permanent.

De préférence, le bloc 1 comprend un moyen pour couper électriquement, sur commande, au moins l'un des pôles de la façade 21, vis-à-vis de son pôle correspondant de la fiche 23. Pour le bloc 1 illustré, ce moyen comprend avantageusement un relais 37, visible sur la figure 8, portant des contacts mobiles non visibles aux figures, ainsi que, respectivement pour chaque pôle 31 et 32, un des contacts fixes 34 et 35 respectifs. Les contacts mobiles du relais 37 sont actionnés entre une position d'ouverture et de fermeture des contacts fixes 34 et 35 par le relais 37. En position d'ouverture du relais 37, au moins l'un des pôles 31 et 32 n'est plus alimenté par la fiche 23, alors qu'en position de fermeture, cette alimentation est assurée.

En variante, on peut prévoir que les pôles 31 et 32 sont électriquement reliés à leur connecteur 27, ou pôle de la fiche 23, respectif de la même façon que l'est le pôle 33, c'est à dire par des contacts fixes individuels respectifs assurant une alimentation électrique permanente des pôles 31 et 32 respectivement par les pôles correspondants de la fiche 23.

Pour protéger l'utilisateur de l'énergie électrique en jeu dans le bloc 1, la façade 21 comprend avantageusement un enjoliveur 40, disposé dans la direction F1 par rapport aux contacts fixes 34, 35 et 36. L'enjoliveur 40 comprend avantageusement une plaque 41 en matériau électriquement isolant, qui s'étend dans un plan orthogonal à l'axe X1. Comme illustré, la plaque 41 est par exemple de forme discoïde centrée sur l'axe X1. De préférence, l'enjoliveur 40 comprend en outre un rebord tubulaire 45 à section circulaire, qui s'élève à partir de la plaque 41 en direction F1, en étant coaxial avec l'axe X1. L'enjoliveur 40, en particulier la plaque 41, est percé d'orifices traversants, donnant respectivement accès aux alvéoles électriques de la prise externe, ici les alvéoles des pôles 31 et 32, et est traversé par toute broche électrique de la prise externe, ici la broche du pôle 33.

Dans le présent exemple, la façade 21, en particulier l'enjoliveur 40, est rapportée contre le boîtier 25, à une extrémité axiale avant du boîtier 25, dans la direction F1. En particulier, la façade 21 est rapportée contre une paroi 29 du boîtier 25, dans la direction F1 par rapport à ladite paroi 29. La paroi 29 est préférentiellement orthogonale à l'axe X1. Le boîtier 25 délimite ainsi un compartiment interne du bloc 1, qui est séparé de la fiche 23 et de la façade 21. De préférence, l'enjoliveur 40 est monté coaxialement à l'intérieur d'une paroi annulaire 26 appartenant au boîtier 25, la paroi annulaire 26 étant formée à l'extrémité axiale avant du boîtier 25, dans la direction F1. La paroi annulaire 26 entoure alors radialement l'enjoliveur 40. La paroi 29 ferme avantageusement la paroi annulaire 26 à une extrémité axiale arrière selon la direction B1 de ladite paroi annulaire 26.

Les contacts 34, 35 et 36 sont avantageusement disposés entre la plaque 41 de l'enjoliveur 40 et la paroi 29.

De préférence, dans le cas où la façade 21 a une fonction de prise externe, on prévoit que la façade 21 comprend en outre un tiroir coulissant 42, qui est mobile en coulissement par rapport aux alvéoles 31 et 32, selon un axe radial par rapport à l'axe X1, entre une position primaire où le tiroir 42 n'obture pas les alvéoles 31 et 32 une position secondaire où le tiroir 42 obture les alvéoles 31 et 32. En position primaire, le tiroir 42 est décalé radialement vers l'extérieur par rapport à la position secondaire. Sur les figures, le tiroir 42 est en position secondaire. Le tiroir 42 est avantageusement en matériau électriquement isolant. Comme visible sur la figure 9, le tiroir 42 est préférentiellement disposé entre l'enjoliveur 40 et les contacts 34 et 35, ou entre l'enjoliveur 40 et la paroi 29 du boîtier 25. En position secondaire, le tiroir 42 évite à un utilisateur d'entrer en contact électrique avec les parties électriquement conductrices au sein des alvéoles 31 et 32.

La façade 21 comprend deux ressorts de sécurité 46, qui exercent une force de rappel élastique du tiroir 42 vers la position secondaire, lorsque le tiroir 42 est en position primaire. En variante, on peut prévoir un nombre de ressorts 46 différent de deux, ou un seul ressort 46.

Le tiroir 42 est préférentiellement porté et guidé en coulissement par des guides 43 de la façade 21, dont l'un est visible figure 9. Ces guides 43 sont avantageusement saillants en surface de la plaque 41 de l'enjoliveur 40, dans la direction B1, chaque ressort 46 étant interposé entre l'un des guides 43 et le tiroir 42.

Le tiroir 42 comprend avantageusement, pour chaque alvéole 31 et 32, une surface en pente 44 respective tournée dans la direction F1 et qui, en position secondaire, s'étend dans l'ouverture de l'alvéole 31 ou 32 concernée pour la boucher. Lors du branchement de la fiche électrique externe dans la prise externe formée par la façade 21, des broches électriques appartenant à la fiche externe sont introduites dans les alvéoles 31 et 32 et appuient chacune l'une des surfaces 44 dans la direction B1, pour opérer un déplacement du tiroir 42 jusqu'à la position primaire, grâce à la forme de pente des surfaces 44. Lorsque la fiche électrique externe est enfichée dans la prise électrique externe du bloc 1, le tiroir 42 est donc mis et maintenu en position primaire par les broches électriques de la prise électrique externe, contre l'action des ressorts 46.

Le bloc 1 comprend une bague 50, qui présente une forme générale tubulaire, coaxiale avec l'axe X1. La bague est préférentiellement en matériau électriquement isolant. Dans le présent exemple, la bague 50 entoure la façade 21 et fait saillie de la façade dans la direction F1. En particulier, la bague 50 enveloppe radialement par l'extérieur, le rebord 45 de l'enjoliveur 40, et s'étend par-delà ce rebord 45 dans la direction F1. En variante, la bague 50 est disposée dans la direction F1 par rapport à la façade 21. En position enfichée du bloc 1, une partie de la bague fait saillie dans la direction F1 par rapport au bord périphérique 9 du logement, et, si elle est prévue, par rapport à la plaque de fixation 11 et à toute pièce de masquage qui pourrait être rapportée sur cette plaque de fixation 11 dans la direction F1. Ainsi, la bague 50 dépasse du support 3 dans la direction F1.

La bague 50 est rotative par rapport à la façade 21, à la fiche 23 et au boîtier 25, ou, pour le moins, par rapport à la fiche 23, autour de l'axe X1. Ainsi, l'axe X1 peut être qualifié d'axe de rotation.

Plus précisément, de préférence, la bague 50 comprend, à son extrémité axiale arrière dans la direction B1, une jupe 61 et, à son extrémité axiale avant dans la direction F1, une couronne avant 60.

La jupe 61 présente avantageusement une forme tubulaire à section circulaire centrée sur l'axe X1 et est disposée autour de la façade 21, en particulier autour de l'enjoliveur 40. La jupe 61 assure notamment le guidage en rotation de la bague 50. Ici, la jupe 61 est supportée et guidée dans cette rotation par la façade 21, en particulier par le rebord 45 de l'enjoliveur 40 et/ou par la paroi annulaire 26 du boîtier 25. De préférence, la bague 50 est rotative par rapport à la fiche 23 autour de l'axe X1, mais est fixe dans une direction parallèle à l'axe X1 par rapport à la fiche 23.

De préférence, la couronne 60 est centrée sur l'axe X1 et s'étend radialement vers l'intérieur à partir d'un bord avant de la jupe 61. La couronne 60 s'étend dans un plan orthogonal à l'axe X1. Radialement au centre de la couronne 60, une ouverture est formée pour permettre d'atteindre la façade fonctionnelle 21 axialement au travers de la bague 50. En position enfichée du bloc 1, au moins la couronne 60 fait saillie du logement 7 et du support 3 en direction F1 pour que l'utilisateur puisse actionner la rotation de la bague 50.

Plus généralement, la bague 50 est disposée de façon à être accessible, au moins pour la partie de la bague 50 qui est saillante dans la direction F1, depuis l'extérieur du logement 7, lorsque le bloc 1 est en position enfichée. Dans cette position enfichée du bloc 1, un utilisateur peut ainsi actionner la bague 50.

La bague 50 est bornée dans sa rotation par rapport à la fiche 23, autour de l'axe X1 entre deux positions, à savoir une position de verrouillage, montrée sur les figures, et une position de déverrouillage, distincte de la position de verrouillage. Par exemple, entre la position de verrouillage et la position de déverrouillage, la bague 50 a effectué une rotation de moins de 45° (degrés), voire moins de 30°, par rapport à la fiche 23 autour de l'axe X1.

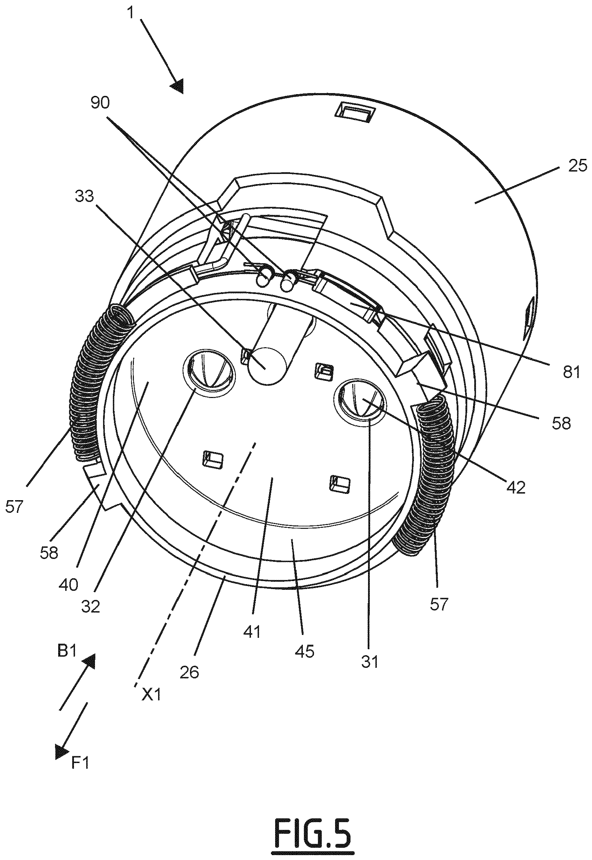

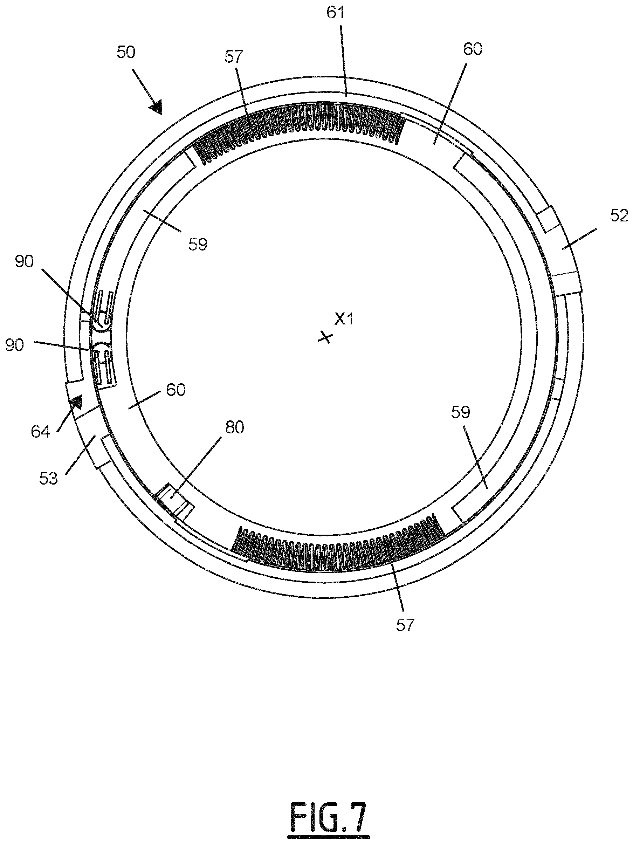

Le bloc 1 comprend avantageusement deux ressorts 57, visibles figures 5 et 7, dits « ressorts de verrou ». Chaque ressort 57 exerce une force de rappel élastique sur la bague 50, qui tend à mettre la bague 50 en rotation vers la position de verrouillage, notamment lorsque la bague est en position de déverrouillage. Ainsi, en l'absence de sollicitation extérieure, la bague 50 revient automatiquement en position de verrouillage sous l'action des ressorts 57.

Dans le présent exemple, chaque ressort 57 est un ressort hélicoïdal de compression. De préférence, l'axe propre de chaque ressort 57 est courbe et s'étend sur un arc de cercle autour de l'axe X1, comme montré sur les figures 5 et 7. Chaque ressort 57 est alors un ressort de compression orthoradial, et s'étend avantageusement dans un plan orthogonal à l'axe X1. Chaque ressort 57 peut alors être circulairement interposé entre une butée orthoradiale 58 respective, appartenant à la façade 21, ou à la paroi annulaire 26 du boîtier 25, et une butée orthoradiale 59 respective, appartenant à la bague 50. Ici, chaque butée 58 est formée en saillie radiale externe du rebord 45 de l'enjoliveur. Ici, chaque butée 59 est formée en saillie radiale interne de la jupe 61, et en saillie axiale dans la direction B1 de la couronne 60. Plus généralement, les butées 59 et 58 se retrouvent dans un même plan orthogonal à l'axe X1, en direction B1 par rapport à la couronne 60 et se retrouvent en direction radiale interne par rapport à la jupe 61. Chaque ressort 57 est avantageusement disposé, axialement, dans la direction B1 par rapport à la couronne, de préférence contre la couronne 60, également dans ce plan orthogonal à l'axe X1. Radialement, chaque ressort 57 est avantageusement disposé entre la jupe 61 et le rebord 45. Ainsi, les ressorts 57 et les butées 58 et 59 sont dissimulés sous la bague 50. Plus généralement, chaque ressort 57 est avantageusement disposé entre la bague 50 et la façade fonctionnelle 21.

En variante, on prévoit un seul ressort de verrou 57, ou un nombre de ressorts de verrou 57 différent de deux.

La bague 50 comprend des ergots 52 et 53, ici au nombre de deux. En variante, on pourrait prévoir un seul ergot, ou un nombre d'ergots différent de deux. Chaque ergot fait saillie radialement vers l'extérieur de la jupe 61. Les ergots de la bague 50 sont avantageusement régulièrement répartis autour de l'axe X1. Ici, les ergots 52 et 53 sont par exemple diamétralement opposés.

Le socle 2 comprend, pour chaque ergot de la bague 50, une encoche de verrouillage respective. Ici, on a donc deux encoches de verrouillage 54 et 55, visibles notamment sur la figure 2, complémentaires respectivement aux ergots 52 et 53. Les encoches de verrouillage 54 et 55 débouchent dans le logement 7. Les encoches de verrouillage 54 et 55 sont orientées, c'est-à-dire qu'elles s'ouvrent, dans une direction radiale interne, vis-à-vis de l'axe X2. Ainsi, lorsque le bloc fonctionnel 1 est reçu dans le logement 7, les encoches 54 et 55 sont orientées radialement vers l'intérieur par rapport à l'axe X1, devenu coaxial avec l'axe X2.

Chaque encoche 54 et 55 forme un chemin, recevant et guidant les ergots 52 et 53, au fur et à mesure de l'introduction du bloc 1 dans le logement 7 le long de l'axe X1. Axialement, chaque encoche 54 et 55 débouche au niveau du bord 9, de façon à admettre en leur sein leur ergot 52 ou 53 correspondant, préférentiellement dès le début de l'introduction des ergots 52 et 53 du bloc 1 dans le logement 7.

A la façon d'un système de verrouillage à baïonnettes, lorsque le bloc fonctionnel 1 est en position enfichée et que la bague est en position de verrouillage, chaque ergot 53 et 54 coopère mécaniquement avec son encoche de verrouillage 54 et 55 correspondante pour maintenir, c'est-à-dire immobiliser ou verrouiller, le bloc fonctionnel dans la position enfichée. Pour cela, chaque encoche 54 et 55 comprend respectivement une surface axiale de retenue 63, tournée dans la direction B2, qui, lorsque la bague 50 est en position de verrouillage et lorsque le bloc 1 est en position enfichée, capture l'ergot 52 ou 53 correspondant, introduit dans l'encoche 54 ou 55 concernée. En cela, les ergots 52 et 53, les encoches 54 et 55, les ressorts 57 et la bague 50 forment un verrou du point de connexion électrique. Lorsque le bloc 1 est en position enfichée et que la bague 50 est en position de verrouillage, le verrou est dans une configuration de verrouillage dans lequel le verrou maintient le bloc 1, axialement, en position enfichée. En position enfichée du bloc 1, la mise en position de verrouillage de la bague 50 fait que le verrou est en configuration de verrouillage. Pour assurer cette configuration de verrouillage maintenant axialement le bloc 1 en position enfichée, les ergots 52 et 53 sont capturés axialement par les encoches 54 et 55, en étant positionnés axialement par-delà des surfaces axiales de retenue 63, dans la direction B2. En configuration de verrouillage, chaque ergot 52 et 53 est axialement aligné avec la surface axiale de retenue 63 appartenant à l'encoche 54 ou 55 correspondante. En d'autres termes, les ergots 52 et 53 arrivent en butée dans la direction F2 contre les surfaces 63, si l'on tente de retirer le bloc 1 du logement 7. Les ressorts 57 agissent pour maintenir la bague 50 dans cette position de verrouillage, ce qui a tendance à maintenir le verrou en configuration de verrouillage.

Plus généralement, lorsque le bloc fonctionnel 1 est en position enfichée et que le verrou est en configuration de verrouillage, chaque ergot 53 et 54 coopère mécaniquement avec son encoche de verrouillage 55 et 56 correspondante pour maintenir du bloc fonctionnel 1 dans la position enfichée.

Le verrou peut évoluer entre la configuration de verrouillage, décrite ci-avant, et une configuration de déverrouillage. En configuration de déverrouillage, le verrou autorise l'introduction du bloc 1 dans le logement 7, jusqu'à sa position enfichée et le retrait du bloc 1 hors du logement 7, à partir de sa position enfichée. Lorsque le bloc 1 est en position enfichée, la configuration de déverrouillage est atteinte par actionnement en rotation de la bague 50 contre l'action des ressorts 57, par l'utilisateur, jusqu'à mettre la bague 50 en position de déverrouillage. Dans la position de déverrouillage de la bague 50, les ergots 52 et 53 sont décalés par rapport aux surfaces axiales de retenue 63, autour de l'axe X1. Les ergots 52 et 53 ne sont donc plus alignés avec les surfaces 63 correspondantes, si bien que lesdits ergots 52 et 53 ne sont plus axialement capturés par les encoches 54 et 55. Dès lors, le bloc fonctionnel 1 peut être librement translaté dans la direction F2 par rapport au socle 2 pour être retiré du logement 7. Une fois que les ergots 52 et 53 ont franchi les surfaces 63 dans la direction F2, l'utilisateur peut relâcher son action sur la bague 50, qui repasse automatiquement en position de verrouillage sous l'action des ressorts 57. Lorsque le bloc 1 n'est plus en positon enfichée et que les ergots 52 et 53 ont franchi les surfaces 63 dans la direction F2, le verrou est en configuration de déverrouillage, que la bague soit en position de verrouillage ou en position de verrouillage.

Comme montré aux figures 2, 4 et 9, l'ergot 53 et l'encoche 55 comprennent respectivement des surfaces 64 et 65, en pente hélicoïdale. Ces surfaces 64 et 65 sont orientées selon une direction en hélice vis-à-vis de l'axe X1 et de l'axe X2, respectivement. En d'autres termes, les surfaces 64 et 65 sont inclinées par rapport au plan orthogonal à l'axe X1 et au plan orthogonal à l'axe X2, respectivement. La surface 65 est tournée à l'oblique dans la direction F2, alors que la surface 64 est tournée à l'oblique dans la direction B1. La surface 65 est disposée dans la direction F2 par rapport à la surface 63. Ainsi, lors de l'introduction du bloc fonctionnel 1 dans le logement 7 vers la position enfichée, l'encoche 55 et l'ergot 53 entrent en contact par l'intermédiaire de ces surfaces en pente hélicoïde 64 et 65, de sorte que la bague 50 est temporairement en liaison hélicoïdale avec le logement 7, le long et autour de l'axe X1. Le déplacement du bloc 1 vers la position enfichée entraîne alors mécaniquement une rotation de la bague 50 depuis la position de verrouillage jusqu'à la position de déverrouillage. Lorsque l'ergot 53 a franchi la surface de retenue 63 dans la direction B2, les surfaces 65 ne sont plus en contact. Dès lors, l'encoche 55 ne contraint plus la position en rotation de la bague 50 à être en position de déverrouillage. La bague 50 est donc libre de repasser en position de verrouillage sous l'action des ressorts 57, de sorte que, le bloc 1 étant en position enfichée, le verrou passe automatiquement en configuration de verrouillage. Ainsi, grâce aux surfaces 64 et 65, à l'insertion du bloc 1 dans le logement 7, il n'est pas nécessaire que l'utilisateur se soucie de la position en rotation de la bague 50, celle-ci étant mise successivement en position de déverrouillage et de verrouillage de façon automatique. Une fois le bloc 1 en position enfichée, le verrou passe automatiquement en configuration de verrouillage sans action de l'utilisateur.

En variante, on pourrait prévoir que seul l'ergot, ou seule l'encoche correspondante, comporte la surface en pente hélicoïde. On pourrait prévoir que plusieurs ergots et/ou plusieurs encoches, comporte une telle surface en pente hélicoïde pour les mêmes effets.

En variante, on pourrait prévoir que tout ou partie des ergots du verrou sont prévus dans le logement 7, en étant saillant radialement vers l'intérieur, chaque encoche correspondante étant prévue sur la bague 50, en étant orientée radialement vers l'extérieur.

De façon préférentielle, dans la position primaire, le tiroir 42 bloque le verrou en configuration de verrouillage, en bloquant la bague 50 en position de verrouillage. En position secondaire, le tiroir 42 autorise le verrou à évoluer entre la configuration de verrouillage et la configuration de déverrouillage, en particulier en autorisant la libre rotation de la bague 50. Ainsi, lorsqu'une fiche externe est enfichée dans la prise externe formée par la façade fonctionnelle 21 et que le bloc 1 est en position enfichée, le verrou est bloqué en configuration de verrouillage par le tiroir 42. De préférence, la bague 50 est alors immobilisée en position de verrouillage, de sorte que l'utilisateur ne peut plus la tourner. Cela empêche un retrait du bloc 1 hors du logement alors qu'une fiche externe est branchée, pour des raisons de sécurité.

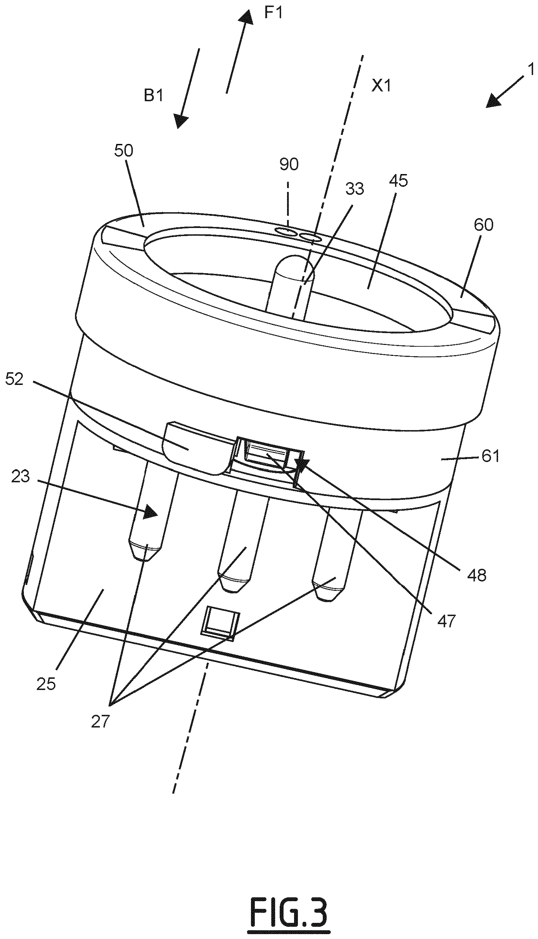

Pour obtenir ce fonctionnement, on prévoit avantageusement, comme montré notamment sur les figures 3, 8 et 9, que le tiroir 42 comprend une jambe de blocage 47, par exemple dirigée radialement, et que la bague 50 comprend une ouverture radiale 48, ménagée dans la jupe 61, de préférence de façon traversante. En position de verrouillage de la bague 50, la jambe 47 est en alignement radial avec l'ouverture radiale 48. En position primaire et en position de verrouillage de la bague, la jambe 47 est reçue dans l'ouverture radiale 48, ce qui bloque la rotation de la bague 50 par capture de la jambe 47 dans l'ouverture 48. En position secondaire, la jambe 47 est hors de l'ouverture 48, la jambe 47 étant à l'écarte de l'ouverture 48 radialement vers l'intérieur, de façon à ne pas s'opposer à la rotation de la bague 50.

Pour atteindre l'ouverture 48 en position primaire, la jambe 47 traverse optionnellement une ouverture radiale traversante du boîtier 25, ménagée en particulier au travers de la paroi annulaire 26. En position de verrouillage de la bague 50, les ouvertures 48 et 49 sont coradiales vis-à-vis de l'axe X1 pour être toutes deux traversées par la jambe 47. L'ouverture 49 contribue avantageusement à la rigidité du blocage de la bague 50 par la jambe 47, en guidant ladite jambe 47 radialement.

Le bloc fonctionnel 1 comprend de préférence un système électronique embarqué. Ce système électronique comprend par exemple, comme montré sur la figure 9, une carte électronique 70 et une carte électronique 71. Chaque carte électronique comprend par exemple un circuit imprimé et des composants électroniques montés sur le circuit imprimé. Les cartes 70 et 71 sont disposées à l'intérieur du boîtier 25, c'est-à-dire dans la direction B1 par rapport à la façade 21. La carte 70 est préférentiellement orientée de façon orthogonale par rapport à l'axe X1. De préférence, la carte 70 est dans la direction B1 par rapport au relais 37. La carte 71, si elle est prévue, est par exemple orientée dans un plan parallèle à l'axe X1, le relais 37 étant radialement interposé entre la carte 71 et l'axe X1

Le relais 37 appartient avantageusement au système électronique, qui est avantageusement alimenté à l'aide de l'énergie électrique reçue à la fiche arrière 23. Le relais 37 est préférentiellement commandé par l'une des cartes 70 et 71. Le système électronique commande ainsi l'ouverture et la fermeture des contacts mobiles, pour activer ou désactiver la fourniture d'énergie électrique à la façade fonctionnelle 21.

La carte 70 embarque avantageusement une fonction de télécommunication. Pour cela, par exemple, la carte 70 comprend un composant de télécommunication et une antenne 74, électriquement connectée au composant de télécommunication. Une partie de l'antenne 74 est visible sur la figure 9. La partie de l'antenne 74 visible sur la figure 9 se présente sous la forme d'un fil, conformé en arc de cercle coaxial avec l'axe X1. De préférence, l'antenne 74 est entièrement formée par un fil souple, pour faciliter son montage et pour autoriser le mouvement en rotation de la bague 50 par rapport à la carte 70. Dans le présent exemple, la partie de l'antenne 74 visible sur la figure 9 est reçue dans une gorge axiale circulaire ménagée dans l'une des butées orthoradiales 59 de la bague 50. Plus généralement, on prévoit qu'au moins une partie de l'antenne 74 s'étend entre la bague 50 et la façade fonctionnelle 21. De préférence, on prévoit que cette partie d'antenne 74 est disposée, radialement, entre le rebord 45 de l'enjoliveur 40 et la jupe 61 de la bague. Axialement, on prévoit avantageusement que cette partie de l'antenne est adossée contre la couronne 60, en étant disposée dans la direction B1 par rapport à la couronne 60. Alternativement, on prévoit que cette partie de l'antenne 74 est adossée contre une collerette radiale externe de l'enjoliveur 40, proche de la couronne 60, la collerette étant portée par le rebord 45. Axialement, cette partie de l'antenne 74 s'étend donc entre la couronne 60 et la plaque 41. Plus généralement, on prévoit qu'une partie de l'antenne 74 est à l'extrémité axiale avant, dans la direction F1, du bloc fonctionnel 1, en étant dissimulée sous la bague 50 ou dans la bague 50. Ainsi, au moins une partie de l'antenne 74 est disposée hors du logement 7 et hors du support 3 en position enfichée du bloc 1, de façon à assurer une réception optimale.

Par exemple, on prévoit que le composant de télécommunication met en oeuvre un protocole de communication sans fil à courte ou moyenne portée, par exemple de type Bluetooth, ZigBee ou wifi. Ainsi, un utilisateur doté d'un terminal, par exemple un ordiphone (« smartphone ») ou une télécommande spécifique au point de connexion, peut télécommander le système électronique du point de connexion par l'intermédiaire de son terminal, le terminal étant lui-même équipé d'un composant de télécommunication compatible. L'utilisateur peut en particulier télécommander le relais 37 grâce à ce terminal.

De préférence, le système électronique comprend un contact électrique primaire 80, porté par la bague 50, comme montré sur la figure 7. Le contact primaire 80 est avantageusement situé dans le même plan que les ressorts 57 et/ou que la partie en arc de cercle de l'antenne 74. Le contact primaire 80 est par exemple fixé à la couronne 60, sur la face de la couronne 60 tournée dans la direction B1, à une position radiale par rapport à l'axe X1. Le contact 80 est avantageusement tourné dans la direction B1. De préférence, le système électronique comprend également, un contact secondaire 81, porté par la façade fonctionnelle 21. Dans le présent exemple, le contact secondaire 81 est fixé sur la paroi 26 du boîtier 25, à une position radiale par rapport à l'axe X1. Le contact 81 est tourné en direction opposé de celle du contact 80. Les contacts 80 et 81 sont respectivement reliés électriquement à la carte 70 par tout moyen approprié, par exemple des conducteurs électriques.

En position de verrouillage de la bague 50, le contact 80 et le contact 81 sont positionnés de façon à être décalés autour de l'axe X1, et ainsi à ne pas être en contact l'un avec l'autre. Dans une position de commande de la bague 50, qui peut être confondue avec la position de déverrouillage ou être située entre la position de déverrouillage et la position de verrouillage, le contact 81 est amené au contact électrique du contact 80. La position de commande est préférentiellement distincte de la position de verrouillage.

En variante, à l'inverse, on peut prévoir que la position de verrouillage mette les contacts 80 et 81 en contact, alors que la position de commande mette les contacts 80 et 81 hors de contact.

La mise en contact des contacts 80 et 81 et la mise hors de contact des contacts 80 et 81, opère un changement d'état du système électronique. Par exemple, le changement d'état est une mise en marche ou en arrêt du système électronique, un enclenchement ou un déclenchement du relais 37, ou une mise en mode d'appairage du composant de télécommunication.

Plus généralement, on prévoit que la bague 50 est rotative jusqu'à la position de commande dans laquelle la bague 50 commande un changement d'état du système électronique, ici par le biais des contacts 80 et 81.

Le système électronique comprend de préférence une ou plusieurs lampes 90, par exemples sous la forme de diodes électroluminescentes, pour indiquer à l'utilisateur l'état du système électronique, par exemple s'il est en marche, à l'arrêt, en panne, en appairage, en communication, et/ou si l'alimentation électrique la façade 21 est active ou coupée. Les lampes 90 sont avantageusement logées dans la bague 50 en étant fixement solidaires de ladite bague 50. Les lampes 90 sont préférentiellement logées radialement à l'intérieur de la jupe 61, contre la couronne 60, axialement dans la direction B1 par rapport à la couronne 60. Les lampes 90 sont axialement disposées entre la paroi 26 du boîtier 25 et la couronne 60 de la bague 50. Ainsi, les lampes 90 sont visibles au travers de la couronne 60 lorsqu'elles sont éclairées. Les lampes 90 sont avantageusement reliées à la carte 70 par des connecteurs souples, qui n'entravent pas la rotation de la bague 50 par rapport à la carte 70.

En variante, au lieu d'être solidairement fixées à la bague 50, les lampes sont solidairement fixées à la paroi 26.

Plus généralement, le système électronique comprend avantageusement une ou plusieurs terminaisons lumineuses, ici formées par les lampes 90. Chaque terminaison lumineuse est préférentiellement disposée entre la bague 50 et la façade fonctionnelle 21, de façon à être visible au travers de la bague 50 lorsque la terminaison lumineuse est éclairée.

Plus généralement, la bague 50 loge de nombreuses fonctions du bloc fonctionnel 1, notamment les lampes 90, les contacts 80 et 81, l'antenne 74 et/ou les ressorts 57.

Au moins un des autres blocs fonctionnels, non représentés, du point de connexion, diffère avantageusement du bloc 1 en ce que la façade fonctionnelle forme une prise électrique externe qui est adaptée à une autre norme de fiche électrique externe, à une autre valeur de tension nominale, comportant un nombre de pôles différent, présentant une forme d'alvéoles et/ou de broches différente, ou constitue par exemple une prise de charge d'un terminal.

Au moins un des autres blocs fonctionnels, non représentés, du point de connexion, diffère avantageusement du bloc 1 en ce que la façade fonctionnelle a une autre fonction que celle d'une prise électrique externe, et comporte par exemple une fonction d'éclairage, d'indication de température, de connexion ethernet par courant porteur, de routage wifi, de détection de presence, de recharge USB, de mesure de qualité de l'air, de box domotique ou d'assistant vocal.

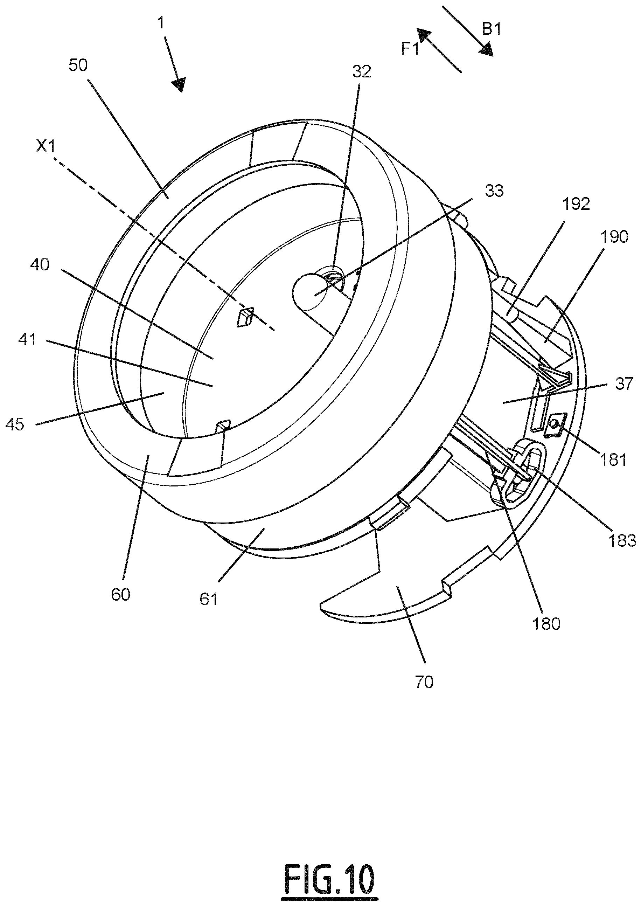

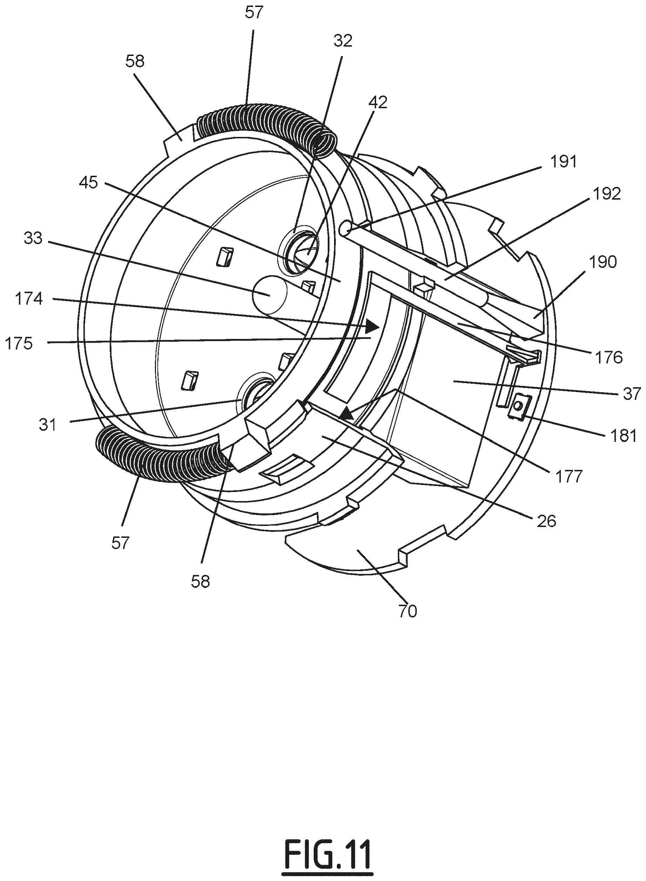

Les figures 10 et 11 montrent un deuxième mode de réalisation d'un point de connexion conforme à l'invention, ce deuxième mode de réalisation étant identique au premier mode de réalisation des figures 1 à 9, sauf en ce qui concerne les différences mentionnées ci-dessous.

Sur les figures 10 et 11, seule une partie axiale avant du boîtier 25 est montrée, une partie axiale arrière du boîtier 25 étant omise pour montrer les composants internes du bloc 1.

Dans le deuxième mode de réalisation, l'antenne 74 souple est remplacée par une antenne 174 rigide, comprenant une partie rigide circulaire 175, coaxiale avec l'axe X1 et s'étendant le long d'un plan orthogonal avec l'axe X1, axialement entre la couronne 60 et la plaque 41. Pour loger cette partie rigide circulaire 175, on prévoit avantageusement que le boîtier 25 ménage une encoche 177, sur une portion seulement de la circonférence de la paroi annulaire 26. La partie 175 est reçue, radialement, entre le rebord 45 et la jupe 61. La partie 175 est reçue, axialement, entre la couronne 60 et la plaque 41. L'antenne 174 reçue dans l'encoche 177 n'entrave donc pas la rotation de la bague 50. Pour connecter électriquement la partie 175 à la carte 70, l'antenne rigide 174 comprend en outre une partie rigide axiale 176, parallèle à l'axe X1, qui s'étend de la partie 175 jusqu'à la carte 70. Une partie de la partie rigide 176 est optionnellement également reçue dans l'encoche 177. La partie 176 sert de pied de support à la partie 175, pour une solidarisation rigide à la carte 70. Ainsi, au moins une partie 175 de l'antenne 174 est disposée hors du logement 7 et hors du support 3 en position enfichée du bloc 1, de façon à assurer une réception optimale.

Dans le deuxième mode de réalisation des figures 8 et 9, au lieu des contacts 80 et 81, le système électronique comprend un bouton de commande 181, par exemple de type micro-interrupteur (« microswitch »), fixé en surface de la carte électronique 70, en étant tourné dans la direction F1. Le bouton 181 est situé à un lieu radial de la carte 70, par rapport à l'axe X1. La bague 50 comprend une jambe de commande 180, qui est par exemple fixée à la jupe 61. La jambe 180 s'étend parallèlement à l'axe X1, dans la direction B1, jusqu'au voisinage de la carte 70. La jambe 180 comprend une extrémité axiale arrière 183, au voisinage de la carte 70, qui est axialement élastique. Dans une première position de la bague 50 parmi les positions de verrouillage et de commande, montrée sur la figure 10, la jambe 180 est décalée par rapport au bouton 181, de sorte que le bouton 181 n'est pas enclenché par la jambe 180. Dans une deuxième position de la bague 50, parmi les positions de verrouillage et de commande, non montrée aux figures, la jambe 180 et le boutons 181 deviennent coaxiaux avec un axe parallèle à l'axe X1, l'extrémité 183 venant appuyer sur le bouton 181 pour l'enclencher. Cela opère le changement d'état du système électronique, de façon équivalente au mode de réalisation des figures 1 à 9.

Au lieu des lampes 90, le deuxième mode de réalisation prévoit que la carte 70 comprend une lampe 190 montée en surface de la carte 70, dans la direction F1. Dans ce mode de réalisation, une terminaison lumineuse est formée par une extrémité axiale avant 191 d'un guide de lumière 192, s'étendant par exemple axialement à partie de la lampe 190 dans la direction F1, l'extrémité 191 étant positionnée, axialement, entre la plaque 41 et la couronne 60, et, radialement, entre le rebord 45 et la jupe 61. Le guide de lumière 192 traverse l'encoche 177 afin de ne pas entraver la rotation de la bague 50. Le guide de lumière 192 transmet l'éclairage de la lampe 190 jusqu'à l'extrémité 191, de sorte que, lorsque la lampe 190 est éclairée, l'extrémité 191 est visible au travers de la couronne 60.

On peut également considérer, en tant que tel et indépendamment de l'invention, un point de connexion électrique qui est identique à celui représenté aux figures 1 à 9, ou à celui représenté aux figures 10 et 11, hormis que ce point de connexion diffère de ceux des figures 1 à 11 en ce que le bloc fonctionnel est fixé à demeure au socle, au lieu d'être fixé de façon amovible. Dans ce cas, le point de connexion est dénué de verrou, et ne présente pas des configurations de verrouillage et de déverrouillage, le bloc fonctionnel n'est plus amovible vis-à-vis du logement.

Dans ce cas, le point de connexion électrique comprend :
- au moins un bloc fonctionnel, qui comprend une façade fonctionnelle ; et
- un socle pour fixer à demeure le point de connexion électrique à un support, tel qu'un mur ou une boîte d'encastrement, le socle comprenant un logement recevant le bloc fonctionnel
- une bague, qui entoure la façade fonctionnelle et est disposée de façon à être accessible depuis l'extérieur du logement, la bague étant rotative par rapport au socle.

Dans ce cas, le point de connexion comprend avantageusement tout ou partie des caractéristiques définies dans ce qui précède pour les modes de réalisation des figures 1 à 11, en particulier un système électronique embarqué dans le module fonctionnel, dont un changement d'état est commandé par rotation de la bague. Pour commander le changement d'état, la bague est tournée entre la position de commande définie ci-avant, et une position initiale, correspondant à la position de verrouillage définie ci-avant. Dans ce cas, la position de verrouillage ne sert pas à mettre un verrou en configuration de verrouillage.

Chaque caractéristique définie pour les modes de réalisation et variantes décrits dans ce qui précède peut être mise en oeuvre dans les autres modes de réalisations et variantes décrits dans ce qui précède, pour autant que techniquement possible.

## Revendications

1. Point de connexion électrique, comprenant :
- au moins un bloc fonctionnel (1), qui comprend une façade fonctionnelle (21) et une fiche électrique arrière (23) fixement solidaire de la façade fonctionnelle (21); et
- un socle (2), pour fixer à demeure le point de connexion électrique à un support (3), le socle (2) comprenant un logement (7) et un connecteur électrique interne (14) débouchant dans le logement (7), le bloc fonctionnel (1) pouvant être reçu dans le logement (7), jusqu'à une position enfichée dans laquelle la fiche électrique arrière (23) est enfichée dans le connecteur électrique interne (14),
dans lequel le point de connexion électrique comprend en outre un verrou, qui évolue entre une configuration de déverrouillage, dans laquelle le verrou autorise un retrait du bloc fonctionnel (1) hors du logement (7), lorsque le bloc fonctionnel (1) est reçu dans le logement (7), et une configuration de verrouillage, dans laquelle le verrou maintient le bloc fonctionnel (1) dans la position enfichée ;
**caractérisé en ce que** le verrou comprend une bague (50), qui appartient au bloc fonctionnel (1), qui entoure la façade fonctionnelle (21) et qui est disposée de façon à être accessible depuis l'extérieur du logement (7) lorsque le bloc fonctionnel (1) est reçu dans le logement (7), la bague (50) étant rotative par rapport à la fiche électrique arrière (23), entre une position déverrouillage, pour mettre le verrou en configuration de déverrouillage, et une position de verrouillage, pour mettre le verrou en configuration de verrouillage lorsque le bloc fonctionnel (1) est en positon enfichée.

2. Point de connexion électrique selon la revendication 1, dans lequel :
- la bague (50) est rotative par rapport à la fiche électrique arrière (23), autour d'un axe de rotation (X1) sur lequel la façade fonctionnelle (21) est centrée et avec lequel la bague (50) est coaxiale ;
- le verrou comprend au moins une encoche de verrouillage (54, 55), qui appartient au socle (2) et qui débouche dans le logement (7), en étant orientée, lorsque le bloc fonctionnel (1) est reçu dans le logement (7), radialement vers l'intérieur par rapport à l'axe de rotation (X1) ;
- la bague (50) comprend, pour chaque encoche de verrouillage (54, 55), un ergot (52, 53) respectif, qui fait saillie radialement vers l'extérieur par rapport à l'axe de rotation (X1) ; et
- lorsque le bloc fonctionnel (1) est en position enfichée et que le verrou est en configuration de verrouillage, chaque ergot (52, 53) coopère mécaniquement avec son encoche de verrouillage (54, 55) correspondante pour maintenir le bloc fonctionnel (1) dans la position enfichée.

3. Point de connexion électrique selon la revendication 2, dans lequel au moins l'une des encoches de verrouillage (55) et son ergot (53) correspondant comprennent une surface en pente hélicoïde (64, 65) et sont configurés pour que :
- lors de l'introduction du bloc fonctionnel (1) dans le logement (7) vers la position enfichée, l'encoche de verrouillage (55) et l'ergot (53) entrent en contact par l'intermédiaire de la surface en pente hélicoïde (64, 65), pour mécaniquement entraîner une rotation de la bague (50) jusqu'à la position de déverrouillage ; et
- lorsque le bloc fonctionnel (1) est en position enfichée, l'encoche de verrouillage (55) et l'ergot (53) ne sont plus en contact par l'intermédiaire de la surface en pente hélicoïde (64, 65), ce qui autorise une mise en position de verrouillage de la bague (50).

4. Point de connexion électrique selon l'une quelconque des revendications précédentes, dans lequel le verrou comprend en outre au moins un ressort de verrou (57), qui exerce une force de rappel élastique de la bague (50) vers la position de verrouillage, lorsque la bague (50) est en position de déverrouillage, chaque ressort de verrou (57) étant disposé entre la bague (50) et la façade fonctionnelle (21).

5. Point de connexion électrique selon l'une quelconque des revendications précédentes, dans lequel le bloc fonctionnel (1) comprend un système électronique, qui comprend une carte électronique (70), disposée à l'intérieur du bloc fonctionnel (1), la bague (50) étant rotative jusqu'à une position de commande dans laquelle la bague (50) commande un changement d'état du système électronique, la position de commande étant distincte de la position de verrouillage.

6. Point de connexion électrique selon la revendication 5, dans lequel le système électronique comprend un contact primaire (80), porté par la bague (50), et un contact secondaire (81), porté par la façade fonctionnelle (21), le contact primaire (80) et le contact secondaire (81) étant positionnés de façon à être mis en contact électrique l'un avec l'autre lorsque la bague (50) atteint la position de commande, pour ainsi commander le changement d'état du système électronique.

7. Point de connexion électrique selon l'une quelconque des revendications 5 ou 6, dans lequel la carte électronique (70) comprend un bouton de commande (181) positionné en surface de la carte électronique, la bague (50) comprenant une jambe de commande (180) qui, en position de commande de la bague (50), appuie sur le bouton de commande (181) pour commander le changement d'état du système électronique.

8. Point de connexion électrique selon l'une quelconque des revendications 5 à 7, dans lequel le système électronique comprend une antenne (74 ; 174), qui est électriquement connectée à la carte électronique (70), qui s'étend au moins en partie entre la bague (50) et la façade fonctionnelle (21).

9. Point de connexion électrique selon l'une quelconque des revendications 5 à 8, dans lequel le système électronique comprend une terminaison lumineuse (90 ; 191), qui est disposée entre la bague (50) et la façade fonctionnelle (21), de façon à être visible au travers de la bague (50) lorsque la terminaison lumineuse est éclairée.

10. Point de connexion électrique selon l'une quelconque des revendications précédentes, dans lequel la façade fonctionnelle (21) forme une prise électrique externe débouchant hors du logement (7) lorsque le bloc fonctionnel (1) est reçu dans le logement (7), la prise électrique externe étant conçue de sorte qu'une fiche électrique externe d'un appareil électrique soit enfichée dans la prise électrique externe, afin d'alimenter ledit appareil électrique via cette fiche électrique externe, avec de l'énergie électrique reçue par la fiche électrique arrière (23).

11. Point de connexion électrique selon la revendication 10, dans lequel le bloc fonctionnel (1) comprend en outre un tiroir (42), qui est mobile entre :
- une position primaire, dans laquelle le tiroir (42) bloque le verrou en configuration de verrouillage, le tiroir étant mis en position primaire par la fiche électrique externe lorsque la fiche électrique externe est enfichée dans la prise électrique externe ; et
- une position secondaire, dans laquelle le tiroir (42) autorise le verrou à évoluer entre la configuration de verrouillage et la configuration de déverrouillage, le bloc fonctionnel (1) comprenant au moins un ressort de sécurité (46) qui exerce une force de rappel élastique du tiroir (42) vers la position secondaire, lorsque le tiroir (42) est en position primaire.

## Patentansprüche

1. Elektrische Anschlussstelle, umfassend:
- mindestens einen Funktionsblock (1), der eine funktionelle Vorderseite (21) und einen an der funktionellen Vorderseite (21) fest verbundenen hinteren elektrischen Stecker (23) umfasst; und
- einen Sockel (2) zur dauerhaften Befestigung der elektrischen Anschlussstelle an einem Träger (3), der Sockel (2) umfassend eine Aufnahme (7) und einen in die Aufnahme (7) mündenden inneren elektrischen Steckverbinder (14) aufweist, wobei der Funktionsblock (1) in der Aufnahme (7) bis zu einer Einsteckposition aufgenommen werden kann, in der der hintere elektrische Stecker (23) in den inneren elektrischen Steckverbinder (14) gesteckt ist,
wobei die elektrische Anschlussstelle ferner eine Verriegelung umfasst, die sich zwischen einer Entriegelungskonfiguration, in der die Verriegelung das Entfernen des Funktionsblocks (1) aus dem Gehäuse (7) ermöglicht, wenn der Funktionsblock (1) in dem Gehäuse (7) aufgenommen ist, und einer Verriegelungskonfiguration, in der die Verriegelung den Funktionsblock (1) in der eingesteckten Position hält, bewegt;
**dadurch gekennzeichnet, dass** die Verriegelung einen zu dem Funktionsblock (1) gehörenden Ring (50) umfasst, der die funktionelle Vorderseite (21) umgibt und der von außerhalb des Gehäuses (7) zugänglich angeordnet ist, wenn der Funktionsblock (1) in dem Gehäuse (7) aufgenommen ist, wobei der Ring (50) in Bezug auf den hinteren elektrischen Stecker (23) zwischen einer Entriegelungsposition, um die Verriegelung in die Entriegelungskonfiguration zu bringen, und einer Verriegelungsposition, um die Verriegelung in die Verriegelungskonfiguration zu bringen, wenn der Funktionsblock (1) in der eingesteckten Position ist, drehbar ist.

2. Elektrische Anschlussstelle nach Anspruch 1, wobei:
- der Ring (50) in Bezug auf den hinteren elektrischen Stecker (23) um eine Drehachse (X1) drehbar ist, auf der die funktionelle Vorderseite (21) zentriert ist und mit der der Ring (50) koaxial ist;
- die Verriegelung mindestens eine zu dem Sockel (2) gehörende Verriegelungskerbe (54, 55) aufweist, die in das Gehäuse (7) mündet und radial nach innen in Bezug auf die Drehachse (X1) ausgerichtet ist, wenn der Funktionsblock (1) in dem Gehäuse (7) aufgenommen ist;
- der Ring (50) für jede Verriegelungskerbe (54, 55) einen entsprechenden Stift (52, 53) umfasst, der in Bezug auf die Drehachse (X1) radial nach außen hervorsteht; und
- wenn der Funktionsblock (1) in der eingesteckten Position ist und die Verriegelung in der Verriegelungskonfiguration ist, jeder Stift (52, 53) mechanisch mit seiner entsprechenden Verriegelungskerbe (54, 55) zusammenwirkt, um den Funktionsblock (1) in der eingesteckten Position zu halten.

3. Elektrische Anschlussstelle nach Anspruch 2, wobei mindestens eine der Verriegelungskerben (55) und ihr entsprechender Stift (53) eine schraubenförmig abfallende Oberfläche (64, 65) umfassen und zu Folgendem konfiguriert sind:
- dass beim Einsetzen des Funktionsblocks (1) in das Gehäuse (7) in die eingesetzte Position die Verriegelungskerbe (55) und der Stift (53) über die schraubenförmig geneigte Oberfläche (64, 65) in Kontakt kommen, um den Ring (50) mechanisch in die Entriegelungsposition zu drehen; und
- wenn der Funktionsblock (1) in der eingesteckten Position ist, die Verriegelungskerbe (55) und der Stift (53) über die schraubenförmig abfallende Fläche (64, 65) nicht mehr in Kontakt sind, sodass der Ring (50) in die Verriegelungsposition bewegt werden kann.

4. Elektrische Anschlussstelle nach einem der vorherigen Ansprüche, wobei die Verriegelung ferner mindestens eine Verriegelungsfeder (57) umfasst, die eine elastische Rückstellkraft von dem Ring (50) in die Verriegelungsposition ausübt, wenn der Ring (50) in der Entriegelungsposition ist, wobei jede Verriegelungsfeder (57) zwischen dem Ring (50) und der funktionellen Vorderseite (21) angeordnet ist.

5. Elektrische Anschlussstelle nach einem der vorherigen Ansprüche, wobei der Funktionsblock (1) ein elektronisches System umfasst, das eine elektronische Platine (70) umfasst, die innerhalb des Funktionsblocks (1) angeordnet ist, wobei der Ring (50) in eine Steuerposition gedreht werden kann, in der der Ring (50) eine Zustandsänderung des elektronischen Systems steuert, wobei die Steuerposition von der Verriegelungsposition verschieden ist.

6. Elektrische Anschlussstelle nach Anspruch 5, wobei die Elektronik einen von dem Ring (50) getragenen Primärkontakt (80) und einen von der funktionellen Vorderseite (21) getragenen Sekundärkontakt (81) umfasst, wobei der Primärkontakt (80) und der Sekundärkontakt (81) positioniert sind, um in elektrischen Kontakt miteinander gebracht zu werden, wenn der Ring (50) die Steuerposition erreicht, um dadurch die Zustandsänderung der Elektronik zu steuern.

7. Elektrischer Anschlusspunkt nach einem der Ansprüche 5 oder 6, wobei die elektronische Platine (70) einen Steuerknopf (181) umfasst, der auf der Oberfläche der elektronischen Platine positioniert ist, wobei der Ring (50) einen Steuerschenkel (180) umfasst, der in der Steuerposition des Rings (50) auf den Steuerknopf (181) drückt, um die Änderung des Zustands des elektronischen Systems zu steuern.

8. Elektrische Anschlussstelle nach einem der Ansprüche 5 bis 7, wobei das elektronische System eine Antenne (74; 174) umfasst, die elektrisch mit der elektronischen Platine (70) verbunden ist, die sich zumindest teilweise zwischen dem Ring (50) und der funktionellen Vorderseite (21) erstreckt.

9. Elektrische Anschlussstelle nach einem der Ansprüche 5 bis 8, wobei die Elektronik einen Lichtanschluss (90; 191) umfasst, der zwischen dem Ring (50) und der funktionellen Vorderseite (21) angeordnet ist, sodass er durch den Ring (50) hindurch sichtbar ist, wenn der Lichtanschluss beleuchtet ist.

10. Elektrische Anschlussstelle nach einem der vorherigen Ansprüche, **dadurch gekennzeichnet, dass** die funktionelle Vorderseite (21) bei Aufnahme des Funktionsblocks (1) in das Gehäuse (7) eine aus dem Gehäuse (7) mündende elektrische Außensteckdose bildet, die konfiguriert ist, sodass ein äußerer elektrischer Stecker eines Elektrogerätes in die äußere Steckdose eingesteckt wird, um dieses Elektrogerät über diesen äußeren elektrischen Stecker mit elektrischer Energie zu versorgen, die von dem hinteren elektrischen Stecker (23) aufgenommen wird.

11. Elektrische Anschlussstelle nach Anspruch 10, wobei der Funktionsblock (1) ferner einen Schieber (42) umfasst, der wie folgt beweglich ist:
- zwischen einer primären Position, in der der Schieber (42) die Verriegelung in einer Verriegelungskonfiguration verriegelt, wobei der Schieber durch den äußeren elektrischen Stecker in die primäre Position bewegt wird, wenn der äußere elektrische Stecker in die äußere elektrische Steckdose gesteckt wird; und
- einer sekundären Position, in der der Schieber (42) die Bewegung der Verriegelung zwischen der Verriegelungs- und der Entriegelungskonfiguration ermöglicht, wobei der Funktionsblock (1) mindestens eine Sicherheitsfeder (46) umfasst, die eine elastische Rückstellkraft auf den Schieber (42) in Richtung der sekundären Position ausübt, wenn der Schieber (42) in der primären Position ist.

## Claims

1. Electrical connection point, comprising:
- at least one function block (1), which comprises a function front (21) and a rear electrical plug (23) fixedly attached to the function front (21); and
- a base (2) for permanently fixing the electrical connection point to a support (3), the base (2) comprising a receptacle (7) and an internal electrical connector (14) opening into the receptacle (7), the function block (1) being receivable into the receptacle (7) up to a plugged-in position in which the rear electrical plug (23) is plugged into the internal electrical connector (14),
wherein the electrical connection point further comprises a latch, which moves between an unlocking configuration, in which the latch allows removal of the function block (1) from the receptacle (7), when the function block (1) is received in the housing (7), and a locking configuration, in which the latch holds the function block (1) in the plugged-in position;
**characterised in that** the latch comprises a ring (50), which belongs to the function block (1), which surrounds the function front (21) and which is arranged to be accessible from outside the housing (7) when the function block (1) is received in the receptacle (7), the ring (50) being rotatable relative to the rear electrical plug (23) between an unlocking position, for putting the latch in the unlocking configuration, and a locking position, for putting the latch in the locking configuration when the function block (1) is in the plugged-in position.

2. The electrical connection point of claim 1, wherein:
- the ring (50) is rotatable with respect to the rear electrical plug (23), about an axis of rotation (X1) on which the function front (21) is centred and with which the ring (50) is coaxial;
- the latch comprises at least one locking notch (54, 55), which belongs to the base (2) and which opens into the housing (7), being oriented radially inwards in relation to the axis of rotation (X1) when the function block (1) is received in the receptacle (7);
- the ring (50) comprises, for each locking notch (54, 55), a respective pin (52, 53) which projects radially outwards with respect to the axis of rotation (X1); and
- when the function block (1) is in the plugged-in position and the latch is in the locking configuration, each pin (52, 53) mechanically mates with its corresponding locking notch (54, 55) to hold the function block (1) in the plugged-in position.

3. The electrical connection point of claim 2, wherein at least one of the locking notches (55) and its corresponding pin (53) comprise a helically sloped surface (64, 65) and are configured such that:
- upon insertion of the function block (1) into the receptacle (7) to the plugged-in position, the locking notch (55) and the pin (53) come into contact via the helically sloped surface (64, 65), to mechanically cause the ring (50) to rotate to the unlocking position; and
- when the function block (1) is in the plugged-in position, the locking notch (55) and the pin (53) are no longer in contact via the helically sloped surface (64, 65), which allows the ring (50) to be moved into the locking position.

4. The electrical connection point according to any one of the preceding claims, wherein the latch further comprises at least one latch spring (57), which exerts a resilient return force from the ring (50) to the locking position, when the ring (50) is in the unlocking position, each latch spring (57) being arranged between the ring (50) and the function front (21).

5. The electrical connection point according to any one of the preceding claims, wherein the function block (1) comprises an electronic system, which comprises an electronic board (70), arranged inside the function block (1), the ring (50) being rotatable to a control position in which the ring (50) controls a change of state of the electronic system, the control position being distinct from the locking position.

6. The electrical connection point according to claim 5, wherein the electronic systems comprise a primary contact (80), carried by the ring (50), and a secondary contact (81), carried by the function front (21), the primary contact (80) and the secondary contact (81) being positioned to be brought into electrical contact with each other when the ring (50) reaches the control position, to thereby control the change of state of the electronic system.

7. The electrical connection point according to any one of claims 5 or 6, wherein the electronic board (70) comprises a control button (181) positioned on the surface of the electronic board, the ring (50) comprising a control leg (180) which, when the ring (50) is in the control position, presses on the control button (181) to control the change of state of the electronic system.

8. The electrical connection point according to any one of claims 5 to 7, wherein the electronic system comprises an antenna (74; 174), which is electrically connected to the electronic board (70), which extends at least partly between the ring (50) and the function front (21).

9. The electrical connection point according to any one of claims 5 to 8, wherein the electronic system comprises a lit termination (90; 191), which is arranged between the ring (50) and the function front (21), so as to be visible through the ring (50) when the lit termination is illuminated.

10. The electrical connection point according to any one of the preceding claims, wherein the function front (21) forms an external electrical socket opening out of the receptacle (7) when the function block (1) is received in the receptacle (7), the external electrical socket being designed so that an external electrical plug of an electrical appliance is plugged into the external electrical socket, in order to supply said electrical appliance, via that external electrical plug, with electrical power received by the rear electrical plug (23).

11. The electrical connection point according to claim 10, wherein the function block (1) further comprises a drawer (42), which is movable between:
- a primary position, in which the drawer (42) locks the latch in a locking configuration, the drawer being moved to the primary position by the external electrical plug when the external electrical plug is inserted into the external electrical socket; and
- a secondary position, in which the drawer (42) allows the latch to move between the locking and unlocking configuration, the function block (1) comprising at least one safety spring (46) which exerts a resilient return force on the drawer (42) towards the secondary position, when the drawer (42) is in the primary position.
